# FASCICULE DE BREVET EUROPEEN

(11) **EP 2 809 446 B1**
(45) Date de publication et mention de la délivrance du brevet: **22.04.2020**
(21) Numéro de dépôt: 13712910.2
(22) Date de dépôt: 01.02.2013
(51) Int. Cl.: B02C 19/16, B02C 21/00, B02C 23/06

(54) **PROCEDE DE BROYAGE FIN D'UNE CHARGE DE MATIERE CARBONEE, INSTALLATION DE TRAITEMENT EN CONTINU DE BIOMASSE ET APPLICATION A LA GAZEIFICATION ASSOCIEE**
VERFAHREN ZUR FEINZERKLEINERUNG VON KOHLENSTOFFHALTIGEM MATERIAL, ANLAGE ZUR KONTINUIERLICHEN VERARBEITUNG VON BIOMASSE UND ANWENDUNG ZUR VERGASUNG
METHOD FOR FINE GRINDING CARBON MATERIAL, INSTALLATION FOR CONTINUOUSLY PROCESSING BIOMASS AND APPLICATION FOR ITS GASIFICATION

(30) Priorité: 03.02.2012 FR 1251028
(43) Date de publication de la demande: 10.12.2014
(73) Titulaire: Commissariat à l'Énergie Atomique et aux Énergies Alternatives, 75015 Paris (FR)
(72) Inventeur: CHATAING, Thierry, F-38250 Lans-en-vercors (FR); BAUW, Clément, F-59910 Bondues (FR); MELKIOR, Thierry, F-38360 Sassenage (FR)
(74) Mandataire: Nony
(86) Numéro de dépôt international: PCT/IB2013/050862
(87) Numéro de publication internationale: WO 2013/114327

(56) Documents cités:
- WO-A2-02/083313
- US-A1- 2001 016 467
- US-A1- 2008 116 118
- US-A1- 2011 057 060

## Description

### Domaine technique

La présente invention concerne le traitement mécanique de charge de matière carbonée et plus particulièrement un procédé de broyage fin d'une telle charge, notamment de biomasse.

On précise ici qu'on entend par broyage fin, un broyage des particules de la charge de matière carbonée jusqu'à obtenir des dimensions microniques, c'est-à-dire jusqu'à des centaines de microns voire jusqu'à des dimensions de l'ordre du millimètre. Bien entendu, les particules de charge de matière carbonée broyées sont de dimensions inférieures aux particules de charge de matière carbonée de dimensions millimétriques ou microniques qui alimentent l'entrée de chambre du broyeur vibrant conformément à l'invention.

Dans le cas de la biomasse lignocellulosique, une première étape de traitement mécanique est classiquement réalisée et consiste en un broyage grossier (déchiquetage pour les plaquettes forestières). Selon l'application souhaitée, une deuxième étape de traitement mécanique consécutif au premier, est nécessaire et consiste en un broyage fin pour conférer des propriétés spécifiques à la poudre de biomasse. Par exemple, il peut s'agir de farine de bois pour la fabrication de biocombustibles sous forme de granulés.

L'invention a donc plus particulièrement trait à cette deuxième étape de traitement mécanique de biomasse, en vue de son injection sous forme pulvérisée dans un réacteur de conversion en aval (gazéification) ou dans un réacteur de combustion ou dit de co-combustion (biomasse et charbon) dans une centrale thermique à charbon ou en vue de sa granulation pour réaliser des biocombustibles.

L'invention s'applique avantageusement à la gazéification de biomasse en vue de la réalisation de biocarburants à partir du gaz de synthèse largement connu sous l'appellation Syngaz. Dans cette application, le procédé de broyage fin de biomasse selon l'invention est de préférence réalisé en amont d'une unité de conditionnement/stockage de poudre elle-même en amont d'un réacteur de gazéification pour produire ultérieurement des biocarburants.

### Etat de la technique

Le traitement mécanique de la biomasse (tronc d'arbre, balles de paille) comprend classiquement une première étape de broyage grossier, en général sur le lieu même de la récolte, qui permet notamment de faciliter le transport et d'en réduire son coût. Cette première étape de broyage est réalisée au moyen de déchiqueteuse (en anglais *« shredder* ») et conduit à des particules de dimensions centimétriques ou millimétriques, typiquement des plaquettes forestières dans les filières bois. Elle est réalisée au moyen de broyeurs à la technologie éprouvée (broyeur à marteaux, à couteaux ou à ciseaux). Les particules ainsi broyées grossièrement constituent ainsi ce que l'on appelle les intrants dans les voies de gazéification ou de combustion de biomasse (cogénération de chaleur et d'électricité, production de chaleur, production de biocarburants).

Pour une application de conversion thermochimique de la biomasse par gazéification, dans un réacteur de type réacteur à flux entrainé, la taille requise pour les particules de biomasse est de l'ordre de quelques centaines de microns.

Pour les applications de combustion de biomasse, de nombreuses études montrent que la taille des particules joue en effet un rôle clef: comme l'indique la publication [1], la micronisation de la poudre favorise la combustion et réduit les émissions de particules.

Un certain nombre d'études est consacré au broyage fin de particules de biomasse, notamment de plaquettes forestières, pour atteindre des granulométries du millimètre au micron selon les cas. Dans ces études, les effets de la nature de la biomasse, du type de broyeur(s) utilisé(s), de la granulométrie désirée ont été caractérisés sur le coût énergétique de l'opération proprement dite de broyage fin, et/ou les propriétés de la poudre obtenue (distribution granulométrique, forme des particules).

De ces études, il a pu se dégager un certain nombre de tendances que l'on peut résumer comme suit.

Pour le broyage de biomasse ligno-cellulosique, les broyeurs à couteaux et les broyeurs à marteaux sont bien adaptés : on peut citer ici les publications [1], [2] qui mettent cela en évidence. Cette opération est d'un coût énergétique peu élevé si la taille des particules visées ne descend pas en dessous du millimètre. Chacune de ces technologies présente des avantages et des inconvénients, comme souligné dans la publication [3]. Ainsi, l'avantage majeur de la technologie dite de broyeurs à marteaux est sa robustesse et un coût d'entretien moindre. En revanche, la consommation énergétique est plus importante pour un broyeur à marteaux, typiquement de l'ordre de 130 kWh/tonne (kWh/t), que pour un broyeur à couteaux, typiquement de l'ordre de 60 kWh/t : voir publication [4]. De plus, la poudre obtenue avec un broyeur à marteaux a une distribution granulométrique plus étalée (publication [5]), ce qui est un inconvénient majeur pour la coulabilité, c'est-à-dire la capacité à s'écouler, de la poudre comme souligné dans les publications [6], [7]. Le broyage par broyeurs à marteaux se produit essentiellement par impact et attrition, ce qui induit une géométrie de particule allongée et déformée, faisant apparaitre des saillies en forme de crochets le long de la fibre, appelés fibrilles, qui favorisent l'effet d'entrelacement entre particules, de cohésion entre les grains et par ce biais l'accentuation de l'effet connu sous l'appellation d'effet de voute dans les récipients (silos) de stockage: voir publication [8]. Il est d'ailleurs à noter qu'un traitement mécanique plus long induit un coût énergétique élevé sans pour autant modifier fondamentalement la forme des particules, car celles-ci subissent toujours un écrasement par les marteaux.

De même, les broyeurs à boulets utilisés classiquement pour le broyage du charbon fonctionnent par attrition et produisent sur les matériaux fibreux des particules allongées et beaucoup de fines.

A côté de ces technologies de broyage éprouvées pour le broyage de charge de matière carbonée, il est connu d'utiliser un broyeur de type vibrant pour réaliser le broyage de matériaux durs et friables, tels que ceux de roche calcaire, des oxydes métalliques... On peut se reporter aux publications [9] et [10] qui décrivent respectivement l'aspect théorique de la fragmentation de ces matériaux et les différentes technologies de broyeur utilisées. Ainsi, dans un broyeur vibrant la fragmentation s'opère par impact et attrition à fréquence variable. L'équipe de Kobayashi et al a pensé à utiliser une technologie de broyeur vibrant afin de réaliser un broyage fin (micronisation de la biomasse) pour une application de combustion : voir publication [6]. Il s'est avéré que la fragmentation par impact permet d'une part de résoudre le problème de la présence de fibrilles sur les particules de biomasse obtenues et d'autre part de raccourcir la longueur des particules en favorisant la propagation des fissures présentes dans les fibres de biomasse. Les essais réalisés par Kobayashi et al ont été effectués directement à partir de plaquettes forestières de dimensions millimétriques (22mm) introduites en entrée de chambre du broyeur vibrant et ont nécessité un temps de traitement de la poudre relativement long pour obtenir les caractéristiques visées (d<30 µm), ce qui s'est traduit par un coût énergétique élevé (800kwh/t).

Il ressort de ces études que le problème majeur du broyage fin de biomasse réside dans le coût énergétique de l'opération proprement dite, du fait du caractère fibreux des particules de biomasse.

En outre, les poudres de biomasse obtenues, c'est-à-dire finement broyées s'avèrent difficiles à transporter, manipuler, injecter dans un réacteur de conversion en aval, car elles ont tendances à former des agglomérats ce qui génère des effets de voute, une mauvaise coulabilité...

Il est connu du brevet US 6,833,185 et de la demande de brevet US 2008/0116118 qu'il est possible d'améliorer les propriétés de coulabilité d'une poudre fine, en la mélangeant à une poudre d'additifs de dimension nanométrique ou submicronique dont la densité de particules apparente moyenne est inférieure à celle de la poudre fine.

Au-delà de l'opération de broyage fin proprement dite, deux voies sont actuellement envisagées pour le traitement global permettant réduire les dimensions de particules de biomasse dans des applications énergétiques (cogénération, production de chaleur, production de produits de combustion, production de biocarburants).

La première voie consiste en une solution mixte de pré-traitement thermique dit de torréfaction combinée à un broyage mécanique par les technologies de broyeurs déjà éprouvées et mentionnées ci-dessus: broyeurs à marteaux pour des matériaux fibreux broyeurs à boulets pour le charbon. La torréfaction est un traitement thermique doux de la biomasse à l'interface entre le séchage et la pyrolyse, généralement réalisé à des températures comprises entre 200 et 350°C et qui vise à éliminer l'eau et à modifier une partie de la matière organique de la biomasse pour casser ses fibres. Autrement dit, ce traitement thermique doux altère la structure fibreuse de la biomasse, facilitant ainsi son broyage. Cela permet de réduire le coût énergétique de broyage et d'obtenir des particules moins fibreuses, donc plus faciles à transporter, stocker et à injecter dans un réacteur en aval: voir publication [11]. La poudre obtenue pour une torréfaction poussée de la biomasse, c'est-à-dire conduisant à une perte de masse supérieure à 30% par l'opération, présente des caractéristiques proches de celles obtenues avec du charbon. Cela permet d'utiliser la solution classiquement retenue pour le broyage et pour l'injection de poudre qui est le convoyage pneumatique (phase dense). En effet, comme déjà évoqué, les caractéristiques intrinsèques de la biomasse (matériau fibreux et élastique) sont à l'origine des difficultés de stockage, transport et d'injection dans des réacteurs de conversion thermochimique. Ainsi, le pré-traitement thermique de torréfaction permet de résoudre le problème, mais pour un coût énergétique qui pourrait s'avérer prohibitif. Des évaluations sont actuellement en cours.

La deuxième voie consiste en l'optimisation soit de broyeurs donnés en fonction du type de biomasse, soit de chaînes complètes de broyage mécanique.

Ainsi, dans la publication [4], des solutions technologiques de broyage mécanique déjà éprouvées sont étudiées en fonction du type de biomasse avec comme objectif principal la réduction du coût énergétique de l'opération de broyage et l'adaptation à l'application visée.

Il a déjà été également proposé d'utiliser deux broyeurs en série pour broyer finement de la biomasse.

L'équipe d'Esteban propose explicitement la mise en série de deux broyeurs afin d'optimiser le coût énergétique de broyage : voir publication [12]. Ici encore, le choix s'est porté sur la mise en œuvre de deux broyeurs du même type, à savoir des broyeurs à marteaux. Les auteurs ont alors travaillé sur l'intégration de l'ensemble pour optimiser le coût énergétique de la chaîne et la granulométrie du produit final. Ils ont ainsi déterminé le seuil granulométrique en sortie du premier broyeur, optimisé les types de recirculation du produit. Sur la base de leurs essais, les auteurs estiment que le coût du broyage à échelle industrielle, c'est-à-dire pour un débit de l'ordre de 10t/h, s'élève à 120 à 150 kWh/t pour des plaquettes forestières (peuplier ou pin respectivement). Toutefois, les auteurs précisent dans la publication [12] qu'il n'a pas été possible d'utiliser une grille de tamisage de taille de tamis inférieure à 1,5 mm en sortie du deuxième broyeur, à cause de problèmes de bourrage. Autrement dit, avec la solution selon Esteban, il apparaît impossible d'obtenir au final des particules broyées finement.

L'équipe de Siyi Luo et al. propose quant à elle une chaîne de broyage capable de traiter mécaniquement à la fois du bois (pin) et des biomasses plus tendres (paille, tiges...) : voir publication [13]. La chaîne proposée permet de réduire les dimensions des particules jusqu'à des valeurs de 250µm fixée par un cyclone en aval afin qu'elles puissent être utilisées dans un brûleur. Plus précisément, la chaîne proposée comprend deux broyeurs en série, à technologie identique dite à lames (en anglais « crushers »). En fonctionnement, le premier broyeur, c'est-à-dire celui le plus en amont, a son axe qui s'étend à l'horizontal tandis que l'axe du second broyeur s'étend à la vertical. Le coût énergétique est évalué à une valeur de 87 kWh/t pour les plaquettes de pin. L'effet de cette chaîne de broyage sur les propriétés de coulabilité et d'injection de la poudre dans un réacteur n'est pas étudié par l'équipe de Siyi Luo et al. En outre, il est à noter que la chaîne intègre un séchage initial de la biomasse, dont le coût énergétique n'est pas intégré dans la valeur évaluée. Par ailleurs, si la granulométrie de la poudre est donnée, la forme des particules de la poudre n'a pas été caractérisée.

La demande de brevet US 2001/016467 divulgue un procédé de broyage ultrafin de particules choisies parmi celles destinées à la production de substances pharmaceutiques ou de matériaux nanostructurés en céramique ou pour les domaines optique et l'électronique, procédé selon lequel les particules à broyer sont introduites dans un broyeur de type vibrant simultanément avec des corps de broyage et des additifs solides, tels que des cristaux d'eau glacée, de C02 glacé ou des agents réfrigérants.

Le but général de l'invention est de pallier au moins une partie des inconvénients de l'état de l'art de traitement de biomasse et plus généralement de charge de matière carbonée en vue de son injection sous forme pulvérisée dans un réacteur de conversion en aval (gazéification) ou dans un réacteur de combustion ou dit de co-combustion (biomasse et charbon) dans une centrale thermique à charbon ou en vue de sa granulation pour réaliser des biocombustibles.

Un but particulier est de proposer un procédé de broyage fin de biomasse, et plus généralement de charge de matière carbonée, qui améliore les propriétés (distribution granulométrique, forme des particules) de la poudre obtenue et ce, à un moindre coût énergétique.

### Exposé de l'invention

Pour ce faire, l'invention a pour objet un procédé de broyage fin d'une charge de matière carbonée selon lequel on introduit la charge de matière carbonée, sous forme de particules de dimensions millimétriques ou microniques, en entrée d'une chambre de broyeur de type vibrant, le broyeur vibrant comprenant des corps de broyage logés de façon libre à l'intérieur de la chambre et adaptés pour broyer des particules, procédé selon lequel on met en vibration la chambre de sorte à concasser les particules introduites d'une part entre les corps de broyage et d'autre part entre ceux-ci et la paroi interne périphérique de la chambre.

Selon l'invention, on introduit en outre en entrée de la chambre une poudre abrasive de matière minérale dont les particules sont de dimensions millimétriques.

Selon un mode de réalisation préféré, la charge de matière carbonée est de la biomasse. Ainsi, pour réaliser une opération de broyage fin de biomasse, les inventeurs ont pensé de manière surprenante à introduire dans un broyeur vibrant, déjà testé avec succès (publication [6]), un matériau abrasif minéral sous la forme de poudre de taille millimétrique, c'est-à-dire de l'ordre de grandeur des particules de biomasse introduites dans le broyeur vibrant. Ainsi, les grains de la poudre abrasive minérale vont améliorer l'efficacité du broyeur vibrant en combinant son effet abrasif à l'effet d'impact (concassage) des corps de broyage libres à l'intérieur de la chambre du broyeur vibrant. Autrement dit, les inventeurs ont pensé judicieusement à faire fonctionner un broyeur vibrant selon un fonctionnement dit semi autogène (voir publication [10]) pour réaliser un broyage fin de biomasse. Par comparaison au broyage fin divulgué dans la publication [6], les inventeurs pensent que le coût énergétique de l'opération de broyage fin proprement dite est diminué et que les propriétés (distribution granulométrique, forme des particules) de la poudre obtenue sont améliorées.

En outre, en choissisant la composition du minéral pour la poudre abrasive, celle-ci peut être avantageusement un complément minéral chimique requis pour la gestion des cendres dans un réacteur de gazéification en aval. En effet, on sait que la teneur en cendre de la biomasse est très variable et de composition très différente. La publication [14] indique que le bois contient typiquement 0.5-1% de cendre avec en majorité du calcium et du potassium, alors que la paille de blé contient 8% de cendres avec en majorité du potassium et de la silice Ainsi, pour ces deux types de biomasse, il y a des écarts importants de teneur en cendre et des compositions très différentes. Ces différences impactent directement le fonctionnement d'un réacteur de gazéification : le fonctionnement avec du bois engendre une température requise de fusion des cendres très élevée, ce qui nécessite l'ajout d'additifs (silice dans ce cas) pour ajuster cette température au fonctionnement du réacteur, typiquement aux environs de 1300-1400°C. Inversement, le fonctionnement avec de la paille entraine une température de fusion requise trop basse pour le fonctionnement d'un réacteur de gazéification nécessitant l'ajout d'additifs différents (calcium) pour remonter cette valeur de température.

De préférence, le rapport entre le débit massique de poudre abrasive de matière minérale introduite et le débit total de matière introduite dans le broyeur vibrant (matière de charge carbonée et poudre abrasive) est inférieur à 5%. Ainsi, pour une matière de biomasse exclusivement constituée par du bois, le rapport est de l'ordre de 0,5%. Pour une matière de biomasse exclusivement constituée par de la paille, le rapport est plutôt de l'ordre de 2-3%.

Ainsi, avantageusement la poudre abrasive de matière minérale est à base de particules d'oxydes de silicium SiO₂. De préférence, la poudre abrasive de matière minérale a une teneur en Si02 supérieure à 80%. Il peut s'agir de silice (sable) ou de quartz par exemple.

Selon un mode de réalisation préféré, on réalise avantageusement une étape de prébroyage à l'aide d'un broyeur à couteaux qui produit une poudre avec des particules moins longues (rapport longueur/diamètre réduit) et un taux de fines particules (<30 µm) réduit. Une calibration des particules par tamisage améliore en outre significativement l'efficacité du broyage fin et de mise en forme des particules. Ainsi, avantageusement, on réalise un prébroyage des particules à une dimension de l'ordre millimétrique et on utiliser le broyeur vibrant pour ajuster la mise en forme des particules (supprimer les fibrilles, arrondir les angles et raccourcir leur longueur).

Selon une variante avantageuse, les dimensions des particules de la charge de matière carbonée introduite sont sensiblement comprises entre 1 et 2 mm.

Selon une autre variante avantageuse, les dimensions des particules de la poudre abrasive de matière minérale introduite sont sensiblement inférieures à 3 mm.

De préférence, les dimensions des particules de la charge de matière carbonée obtenues en sortie du broyeur vibrant sont sensiblement inférieures à 800 µm, de préférence à 200 µm.

Selon une variante avantageuse, les corps de broyage du broyeur vibrant logés de façon libre à l'intérieur de la chambre consistent en plusieurs jeux de barres cylindriques de diamètre unitaire différents entre eux.

L'invention concerne également un procédé de traitement de biomasse selon lequel on fait sécher de la biomasse à l'état brut, puis on réalise le procédé de broyage fin tel qu'il vient d'être décrit, en introduisant dans la chambre du broyeur vibrant la biomasse au moins séchée.

De préférence, l'alimentation en biomasse séchée est faite avec une teneur en eau de celle-ci dans une gamme de 10 à 15%.

Selon un mode de réalisation avantageux, on réalise en amont du procédé de broyage fin, un pré-broyage de la biomasse séchée en introduisant celle-ci dans une chambre d'un broyeur de type à couteaux ou à ciseaux, comprenant par exemple des encoches pratiquées sur un arbre central monté en rotation dans la chambre, les encoches étant adaptées pour arracher les particules de biomasse séchée contre la paroi interne périphérique de la chambre. On obtient ainsi un traitement de biomasse à moindre coût énergétique. Selon une variante avantageuse, les dimensions des particules de la biomasse pré-broyée sont sensiblement supérieures à 1 mm.

Selon un mode de réalisation avantageux, on réalise en amont du procédé de broyage fin, et en aval du pré-broyage de la biomasse séchée, un tamisage de la biomasse pré-broyée. Selon une variante avantageuse, le tamisage de la biomasse pré-broyée est réalisé de sorte à réaliser le procédé de broyage fin à partir de particules de dimensions millimétriques inférieures à 2 mm ou de dimensions microniques inférieures à 500 µm.

De préférence, les particules de dimensions millimétriques supérieures à 2 mm sont réintroduites dans le broyeur à couteaux.

Selon un mode de réalisation avantageux, en sortie de chambre du broyeur vibrant on sélectionne les particules obtenues en fonction de leurs dimensions de sorte à ce que celles-ci soient comprises entre 30 et 200 µm.

L'invention a également pour objet une installation de traitement de biomasse en continu, destinée à mettre en œuvre le procédé de traitement mentionné ci-dessus, comprenant :
- un appareil de séchage ;
- un broyeur de type vibrant, en aval de l'appareil de séchage
- des moyens d'introduction de poudre abrasive minérale reliés à l'entrée de la chambre du broyeur vibrant.

L'installation peut comprendre en outre immédiatement en aval de l'appareil de séchage et en amont du broyeur vibrant, un broyeur à couteaux.

Elle peut également comprendre en outre immédiatement en aval du broyeur à couteaux et immédiatement en amont du broyeur vibrant, un appareil de tamisage.

Elle peut enfin comprendre en outre un sélecteur dynamique à vitesse variable immédiatement en aval du broyeur vibrant, ledit sélecteur dynamique étant adapté pour extraire en sortie du broyeur vibrant des particules inférieures à un diamètre souhaité.

Les corps de broyage du broyeur vibrant logés de façon libre à l'intérieur de la chambre consistent avantageusement en plusieurs jeux de barres cylindriques de diamètre unitaire différents entre eux.

### Description détaillée

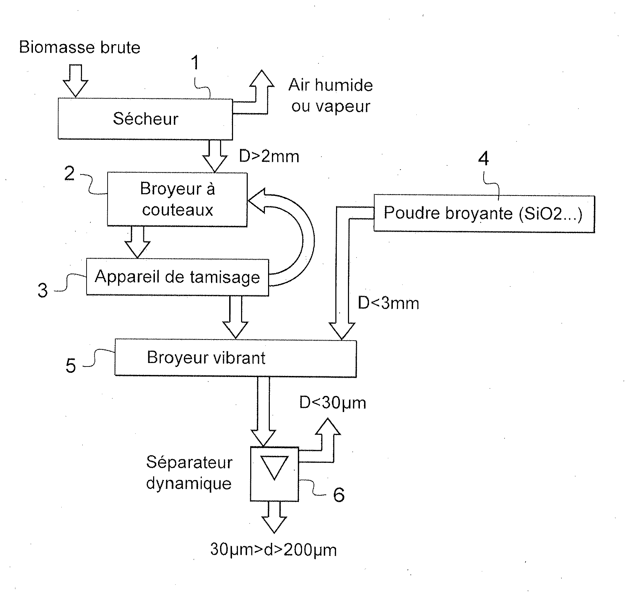

D'autres avantages et caractéristiques de l'invention ressortiront mieux à la lecture de la description détaillée de l'invention faite à titre illustratif et non limitatif en référence à la figure unique. Cette figure unique est une vue schématique d'un mode de réalisation d'une installation de traitement de biomasse en continu intégrant un broyeur vibrant et permettant de mettre en œuvre le procédé de broyage fin de la biomasse se selon l'invention.

Dans la description qui va suivre les termes « entrée », « sortie » « amont », « aval » sont utilisés par référence avec la direction de transfert de la biomasse et de la poudre abrasive minérale à la fois dans le broyeur vibrant selon l'invention, et dans l'installation intégrant un tel broyeur.

L'installation comprend tout d'abord en amont un sécheur 1 alimentée en biomasse brute traitée pour réaliser son séchage. A titre d'exemple, la biomasse brute traitée consiste en des plaquettes forestières, typiquement de quelques mm d'épaisseur et de quelques cm de longueur. A titre d'exemple également, le débit de biomasse brute traitée est de l'ordre de 1 t/h et le sécheur 1 utilisé est un sécheur à four tournant, commercialisé par la société MAGUIN. Cette étape de séchage permet d'avoir une consommation énergétique réduite de l'opération de pré broyage immédiatement en aval d'une part et permettre le fonctionnement optimal de l'opération de broyage selon l'invention d'autre part. On peut envisager tous types de sécheurs disponibles sur le marché (four tournant, sécheur à bande etc....) pour réaliser cette étape.

Une fois la biomasse séchée en sortie du sécheur 1, elle est introduite dans un broyeur à couteaux 2 qui réalise donc une étape de pré-broyage mécanique des particules de biomasse séchée. A titre d'exemple, le broyeur à couteaux 2 peut être de type monorotor (FL/FNG/FNV) fonctionnant également au débit de 1t/h et commercialisé sous la dénomination commerciale Poittemill Forplex. Pour réduire le coût énergétique de cette opération de pré-broyage, on veille à obtenir avantageusement en sortie du broyeur à couteaux des particules de dimensions au moins égales au millimètre.

Pour optimiser l'opération de pré-broyage et réduire la distribution granulométrique des particules, une opération de tamisage est réalisée en continu à l'aide d'un appareil de tamisage 3. A titre d'exemple, il peut s'agir d'un tamiseur vibrant commercialisé par la société RITEC, sous l'appellation de type MC. Comme montré sur la figure unique, les particules de dimensions supérieures à 2 mm sont de préférence réinjectées dans le broyeur à couteaux 2. Au cours de cette étape de tamisage en continu, on peut avantageusement réaliser une extraction des très fines particules, de diamètre inférieur à 30 µm, à l'aide d'un sélecteur dynamique non représenté : selon cette variante, la fraction ainsi prélevée peut être utilisée comme combustible pour apporter de l'énergie au sécheur 1. Ainsi, en sortie de l'appareil de tamisage on obtient des particules de dimensions comprises sensiblement entre 1 et 2 mm. On peut également réaliser cette opération de tamisage avec un appareil de tamisage d'ouvertures de mailles de dimensions micrométriques (microniques) de sorte à obtenir en sortie de l'appareil des particules de biomasse séchée de dimensions microniques, typiquement comprises entre 0 et 500 µm ou entre 0 et 200 µm.

On réalise enfin en continu un broyage fin des particules de biomasse séchées, pré-broyées, et tamisées.

Pour ce faire, ces particules sont introduites concomitamment avec des particules de matière minérale abrasive 4 en entrée de chambre d'un broyeur vibrant 5. A titre d'exemple, le broyeur vibrant 5 peut être celui commercialisée par la société RITEC sous l'appellation Palla 50U (90 kW) qui intègre deux étages de broyage ou autrement dit deux chambres dans un même appareil. Le broyage fin selon l'invention combine alors avantageusement l'effet du broyeur vibrant 5 et des particules minérales 4 injectées.

Autrement dit, le broyeur vibrant 5 fonctionne en fonctionnement semi autogène avec la poudre broyante 4 abrasive minérale de dimensions de particules égales à 3 mm. En tant que corps de broyage logés librement à l'intérieur de la chambre du broyeur vibrant, on peut utiliser des corps en acier de préférence sous forme de barres cylindriques pleines. De préférence encore, les barres cylindriques utilisées peuvent avoir un diamètre compris entre 10 et 60 mm, de préférence entre 20 et 50 mm. Les corps broyants peuvent être également soit sous forme de boulets, soit sous forme de cylpebs. De préférence, les corps broyants sont de dimensions unitaires différentes entre eux. Selon une variante avantageuse, on peut utiliser avantageusement plusieurs jeux de barres cylindriques de diamètres unitaires différents entre eux, logés de façon libre dans une même chambre du broyeur vibrant 5. On améliore ainsi encore l'efficacité du broyage car comparativement à des barres cylindriques de même diamètre unitaire, on réduit statistiquement les jeux entre barres de diamètre unitaire différent.

En sortie du broyeur vibrant 5, on extrait les particules de dimensions unitaires inférieure à 30 µm à l'aide d'un sélecteur dynamique 6. A titre d'exemple, le sélecteur dynamique 6 peut être celui commercialisé par la société RHEWUM sous l'appellation de type AQ. Cette extraction est avantageuse car les très fines particules amoindrissent la propriété d'écoulement de la poudre. Cette fraction extraite peut être utilisée en tant que produit de combustion directement dans un réacteur de conversion en aval et/ou en tant que produit de combustion directement dans le sécheur 1 en amont, ce qui permet encore de réduire le coût énergétique.

Pour optimiser le coût énergétique de l'installation qui vient d'être décrite, on veille à trouver un optimum entre les dimensions des particules visée entre l'étape de pré-broyage par le broyeur à couteaux 2 et le broyage fin par_le broyeur vibrant 5 et l'énergie totale consommée.

Bien que décrite en référence exclusivement à la biomasse l'installation peut être utilisée pour le broyage fin d'autres charges de matière carbonée (charbon, petcoke...).

### Références citées

[1]: Particle and handling characteristics of wood fuel powder: effects of different mills, de Susanne Paulrud, Jan Erik Mattsson et Calle Nilsson, Décembre 2001 (Fuel Processing Technology 76 (2002) pp 23- 39);
*[2]:* 1st Int. Symp. on Particle Size Reduction, de M. A. Heimann Mai 1983, Manhattan ;
*[3]:* Review and analysis of performance and productivity of size reduction equipment for fibrous materials, de Mozammel Hoque, Shahab Sokhansanj, Ladan Naimi, Xiaotao Bi, and Jim Lim, Juin 2007 (Meeting Présentation of the American Society of Agricultural and Biological Engineers (Paper Number 076164));
*[4]:* Biomass Size Reduction Machines for Enhancing Biogas Production, de Lukas Kratky et Tomas (Chem. Eng. Technolpgy. 2011, 34, No. 3, pp 391-399) ;
[5] : Comminution Energy consumption of biomass in Knife Mill and its Particle Size Characterization de Venkata S. P. Bitra Alvin R. Womac, Igathinathane Cannayen Petre I. Miu, Yuechuan T. Yang et Shahab Sokhansanj, Juin 2009 (Meeting Présentation of the American Society of Agricultural and Biological Engineers (Paper Number 095898));
[6] : A new pulverized biomass utilization technology, de Nobusuke Kobayashi, Piao Guilin, Jun Kobayashi, Shigenobu Hatano, Yoshinori Itaya, Shigekatsu Mori (Powder Technology 180 (2008) pp 272-283) ;
[7] : Flow properties of biomass and coal blends, de Mohammad Zulfiqar, Behdad Moghtaderi, Terry F. Wall Fuel Processing Technology 87 (2006) pp 281-288) ;
[8] : Mixing and segregation in powders, de JC Williams (Chapitre 4 - Principles of Powder technologies edited by M.J. Rhodes) ;
*[9] :*Fragmentation - Aspect théorique Techniques de l'ingénieur [J 3 050] ;
[10] *:*Fragmentation - Technologie Techniques de l'ingénieur [J 3 051] ;
[11] *:* Influence of torrefaction on the grindability and reactivity of woody biomass de B. Arias, C. Pevida, J. Fermoso, M.G. Plaza, F. Rubiera, J.J. Pis (Fuel Processing Technology 89 (2008) pp 169-175) ;
[12] : Evaluation of different strategies for pulverization of forest biomasses, d'Esteban et Carrasco (Powder Technology 166 (2006) pp 139-151) ;
[13] : A novel biomass pulverization technology, de Siyi Luo, Chang Liu, Bo Xiao, Lei Xiao (Renewable Energy 36 (2011) pp 578- 582)
[14] : Bioenergy II: Suitability of Wood Chips and Various Biomass Types for Use in Plant of BtL Production by Gasification de Dupont, Capucine; Rouge, Sylvie, Berthelot; Alain, Perez; Denilson Da Silva; Graffin, Ambroise ; Labalette, Francoise ; Laboubee, Celine ; Mithouard, Jean-Claude; Pitocchi, Sophie (INTERNATIONAL JOURNAL OF CHEMICAL REACTOR ENGINEERING (2010) Volume: 8 Article Number: A74).

## Revendications

1. Procédé de broyage fin d'une charge de matière carbonée selon lequel on introduit la charge de matière carbonée, sous forme de particules de dimensions millimétriques ou microniques, en entrée d'une chambre de broyeur de type vibrant (5), le broyeur vibrant comprenant des corps de broyage logés de façon libre à l'intérieur de la chambre et adaptés pour broyer des particules, procédé selon lequel on met en vibration la chambre de sorte à concasser les particules introduites d'une part entre les corps de broyage et d'autre part entre ceux-ci et la paroi interne périphérique de la chambre, **caractérisé en ce qu'**on introduit en outre en entrée de la chambre une poudre abrasive de matière minérale (4) dont les particules sont de dimensions millimétriques.

2. Procédé de broyage fin selon la revendication 1, selon lequel la poudre abrasive de matière minérale est à base de particules d'oxydes de silicium SiO₂.

3. Procédé de broyage fin selon l'une des revendications précédentes, selon lequel les dimensions des particules de la poudre abrasive de matière minérale introduite sont sensiblement inférieures à 3 mm.

4. Procédé de broyage fin selon l'une des revendications précédentes, selon lequel les dimensions des particules de la charge de matière carbonée obtenues en sortie du broyeur vibrant sont sensiblement inférieures à 800 µm, de préférence inférieures à 200 µm.

5. Procédé de traitement de biomasse selon lequel on fait sécher de la biomasse à l'état brut, puis on réalise le procédé de broyage fin selon l'une des revendications précédentes en introduisant dans la chambre du broyeur vibrant la biomasse au moins séchée.

6. Procédé de traitement de biomasse selon la revendication 5, selon lequel on réalise en amont du procédé de broyage fin, un pré-broyage de la biomasse séchée en introduisant celle-ci dans une chambre d'un broyeur de type à couteaux ou à ciseaux.

7. Procédé de traitement de biomasse selon la revendication 6, selon lequel les dimensions des particules de la biomasse pré-broyée sont sensiblement supérieures à 1 mm.

8. Procédé de traitement de biomasse selon la revendication 6 ou 7, selon lequel on réalise en amont du procédé de broyage fin, et en aval du pré-broyage de la biomasse séchée, un tamisage de la biomasse pré-broyée.

9. Procédé de traitement de biomasse selon la revendication 8, selon lequel le tamisage de la biomasse pré-broyée est réalisé de sorte à réaliser le procédé de broyage fin à partir de particules de dimensions millimétriques inférieures à 2 mm ou de dimensions microniques inférieures à 500 µm.

10. Procédé de traitement de biomasse selon la revendication 9, selon lequel les particules de dimensions millimétriques supérieures à 2 mm sont réintroduites dans le broyeur à couteaux.

11. Procédé de traitement de biomasse selon l'une des revendications 5 à 10, selon lequel en sortie de chambre du broyeur vibrant on sélectionne les particules obtenues en fonction de leurs dimensions de sorte à ce que celles-ci soient comprises entre 30 et 200 µm.

12. Installation de traitement de biomasse en continu, destinée à mettre en œuvre le procédé selon l'une quelconque des revendications 5 à 11, comprenant :
- un appareil de séchage (1);
- un broyeur de type vibrant (5), en aval de l'appareil de séchage
- des moyens d'introduction de poudre abrasive minérale reliés à l'entrée de la chambre du broyeur vibrant.

13. Installation de traitement de biomasse en continu selon la revendication 12, comprenant en outre immédiatement en aval de l'appareil de séchage et en amont du broyeur vibrant, un broyeur à couteaux (2).

14. Installation de traitement de biomasse en continu selon l'une des revendications 12 ou 13, comprenant en outre un sélecteur dynamique à vitesse variable (6) immédiatement en aval du broyeur vibrant, ledit sélecteur dynamique étant adapté pour extraire en sortie du broyeur vibrant des particules inférieures à un diamètre souhaité.

15. Installation de traitement de biomasse en continu selon l'une des revendications 12 à 14, dans laquelle les corps de broyage du broyeur vibrant logés de façon libre à l'intérieur de la chambre consistent en plusieurs jeux de barres cylindriques de diamètre unitaire différents entre eux.

## Patentansprüche

1. Verfahren zur Feinzerkleinerung einer Charge von kohlenstoffhaltigem Material, gemäß welchem die Charge von kohlenstoffhaltigem Material, in der Form von Teilchen mit Millimeter- oder Mikron-Abmessungen, am Eingang einer Kammer eines Zerkleinerers (5) des vibrierenden Typs eingebracht wird, wobei der vibrierende Zerkleinerer Zerkleinerungskörper umfasst, die frei im Inneren der Kammer angeordnet sind und dafür geeignet sind, die Teilchen zu zerkleinern, wobei gemäß dem Verfahren die Kammer derart in Vibration versetzt wird, dass die eingebrachten Teilchen einerseits zwischen den Zerkleinerungskörpern und andererseits zwischen diesen und der peripheren Innenwand der Kammer zerkleinert werden, **dadurch gekennzeichnet, dass** außerdem am Eingang der Kammer ein Schleifpulver (4) aus mineralischem Material eingebracht wird, dessen Teilchen Millimeter-Abmessungen aufweisen.

2. Verfahren zur Feinzerkleinerung nach Anspruch 1, gemäß welchem das Schleifpulver aus mineralischem Material auf Teilchen aus Siliciumoxiden SiO₂ besteht.

3. Verfahren zur Feinzerkleinerung nach einem der vorhergehenden Ansprüche, gemäß welchem die Abmessungen der Teilchen des eingebrachten Schleifpulvers aus mineralischem Material im Wesentlichen kleiner als 3 mm sind.

4. Verfahren zur Feinzerkleinerung nach einem der vorhergehenden Ansprüche, gemäß welchem die Abmessungen der Teilchen der Charge von kohlenstoffhaltigem Material, die am Ausgang des vibrierenden Zerkleinerers erhalten werden, im Wesentlichen kleiner sind als 800 µm, vorzugsweise kleiner als 200 µm.

5. Verfahren zur Verarbeitung von Biomasse, gemäß welchem Biomasse im rohen Zustand trocknen gelassen wird, dann das Verfahren zur Feinzerkleinerung nach einem der vorhergehenden Ansprüche durchgeführt wird, indem die mindestens getrocknete Biomasse in die Kammer des vibrierenden Zerkleinerers eingebracht wird.

6. Verfahren zur Verarbeitung von Biomasse nach Anspruch 5, gemäß welchem stromaufwärts von dem Verfahren zur Feinzerkleinerung eine Vorzerkleinerung der getrockneten Biomasse durchgeführt wird, indem diese in eine Kammer eines Zerkleinerers des Typs mit Messern oder mit Scheren eingebracht wird.

7. Verfahren zur Verarbeitung von Biomasse nach Anspruch 6, gemäß dem die Abmessungen der Teilchen der vorzerkleinerten Biomasse im Wesentlichen größer sind als 1 mm.

8. Verfahren zur Verarbeitung von Biomasse nach Anspruch 6 oder 7, gemäß dem stromaufwärts von dem Verfahren zur Feinzerkleinerung und stromabwärts von der Vorzerkleinerung der getrockneten Biomasse ein Sieben der vorzerkleinerten Biomasse durchgeführt wird.

9. Verfahren zur Verarbeitung von Biomasse nach Anspruch 8, gemäß welchem das Sieben der vorzerkleinerten Biomasse derart durchgeführt wird, dass das Verfahren zur Feinzerkleinerung an Teilchen mit Millimeter-Abmessungen kleiner als 2 mm oder mit Mikron-Abmessungen kleiner als 500 µm durchgeführt wird.

10. Verfahren zur Verarbeitung von Biomasse nach Anspruch 9, gemäß welchem die Teilchen mit Millimeter-Abmessungen größer als 2 mm erneut in den Zerkleinerer mit Messern eingebracht werden.

11. Verfahren zur Verarbeitung von Biomasse nach einem der Ansprüche 5 bis 10, gemäß welchem am Ausgang der Kammer des vibrierenden Zerkleinerers die Teilchen, die in Abhängigkeit von ihren Abmessungen erhalten werden, derart ausgewählt werden, dass diese zwischen 30 und 200 µm liegen.

12. Anlage zur kontinuierlichen Verarbeitung von Biomasse, welche dazu bestimmt ist, das Verfahren nach einem der Ansprüche 5 bis 11 durchzuführen, umfassend:
- einen Trocknungsapparat (1);
- einen Zerkleinerer (5) des vibrierenden Typs, stromabwärts von dem Trocknungsapparat;
- Mittel zum Einbringen von mineralischem Schleifpulver, die mit dem Eingang der Kammer des vibrierenden Zerkleinerers verbunden sind.

13. Anlage zur kontinuierlichen Verarbeitung von Biomasse nach Anspruch 12, außerdem umfassend einen Zerkleinerer (2) mit Messern unmittelbar stromabwärts von dem Trocknungsapparat und stromaufwärts von dem vibrierenden Zerkleinerer.

14. Anlage zur kontinuierlichen Verarbeitung von Biomasse nach einem der Ansprüche 12 oder 13, außerdem umfassend einen dynamischen Selektor (6) mit variabler Geschwindigkeit unmittelbar stromabwärts von dem vibrierenden Zerkleinerer, wobei der dynamische Selektor dafür geeignet ist, um am Ausgang des vibrierenden Zerkleinerers Teilchen zu extrahieren, die kleiner sind als ein gewünschter Durchmesser.

15. Anlage zur kontinuierlichen Verarbeitung von Biomasse nach einem der Ansprüche 12 bis 14, wobei die Zerkleinerungskörper des vibrierenden Zerkleinerers, die frei im Inneren der Kammer angeordnet sind, aus mehreren Sätzen von zylindrischen Stäben mit voneinander verschiedenen Einheitsdurchmessern bestehen.

## Claims

1. Process for the fine grinding of a feedstock of carbon-based material, according to which the feedstock of carbon-based material, in the form of particles of millimetric or micronic dimensions, is introduced at the inlet of a chamber of a vibrating-type mill (5), the vibrating mill comprising grinding bodies freely housed inside the chamber and suitable for grinding particles, according to which process the chamber is vibrated so as to crush the particles introduced, on the one hand, between the grinding bodies and, on the other hand, between the latter and the peripheral internal wall of the chamber, **characterized in that** an abrasive powder of mineral material (4), the particles of which are of millimetric dimensions, is additionally introduced at the inlet of the chamber.

2. Fine grinding process according to Claim 1, according to which the abrasive powder of mineral material is based on particles of silicon oxide SiO₂.

3. Fine grinding process according to either of the preceding claims, according to which the dimensions of the particles of the abrasive powder of mineral material introduced are substantially less than 3 mm.

4. Fine grinding process according to one of the preceding claims, according to which the dimensions of the particles of the feedstock of carbon-based material which are obtained at the outlet of the vibrating mill are substantially less than 800 µm, preferably less than 200 µm.

5. Biomass treatment process, according to which biomass in the raw state is dried and then the fine grinding process according to one of the preceding claims is carried out by introducing the at least dried biomass into the chamber of the vibrating mill.

6. Biomass treatment process according to Claim 5, according to which, upstream of the fine grinding process, a pregrinding of the dried biomass is carried out by introducing this dried biomass into a chamber of a knife-type or scissor-type mill.

7. Biomass treatment process according to Claim 6, according to which the dimensions of the preground biomass particles are substantially greater than 1 mm.

8. Biomass treatment process according to Claim 6 or 7, according to which, upstream of the fine grinding process and downstream of the pregrinding of the dried biomass, a sieving of the preground biomass is carried out.

9. Biomass treatment process according to Claim 8, according to which the sieving of the preground biomass is carried out so as to carry out the fine grinding process starting from particles with millimetric dimensions of less than 2 mm or with micronic dimensions of less than 500 µm.

10. Biomass treatment process according to Claim 9, according to which the particles with millimetric dimensions of greater than 2 mm are reintroduced into the knife mill.

11. Biomass treatment process according to one of Claims 5 to 10, according to which, at the outlet of the chamber of the vibrating mill, the particles obtained are selected as a function of their dimensions so that they are between 30 and 200 µm.

12. Continuous biomass treatment plant, intended to implement the process according to any one of Claims 5 to 11, comprising:
- a drying device (1);
- a vibrating-type mill (5), downstream of the drying device;
- means for introducing mineral abrasive powder that are connected to the inlet of the chamber of the vibrating mill.

13. Continuous biomass treatment plant according to Claim 12, further comprising a knife mill (2) immediately downstream of the drying device and upstream of the vibrating mill.

14. Continuous biomass treatment plant according to either of Claims 12 and 13, further comprising a variable-speed dynamic selector (6) immediately downstream of the vibrating mill, said dynamic selector being suitable for extracting, at the outlet of the vibrating mill, particles of less than a desired diameter.

15. Continuous biomass treatment plant according to one of Claims 12 to 14, in which the grinding bodies of the vibrating mill freely housed inside the chamber consist of several sets of cylindrical bars with unitary diameters that are different from one another.
